# EUROPEAN PATENT SPECIFICATION

(11) **EP 4 485 848 B1**
(45) Date of publication and mention of the grant of the patent: **18.11.2026**
(21) Application number: 23758924.7
(22) Date of filing: 13.01.2023
(51) Int. Cl.: H04L 9/32, G06F 21/30, H04L 9/40, H04W 12/06, G06F 21/10, G06F 21/60, H04W 12/10

(54) **DEVICE PHYSICAL IDENTITY AUTHENTICATION METHOD AND APPARATUS, AND SYSTEM AND FIRST PLATFORM**
VERFAHREN UND VORRICHTUNG ZUR AUTHENTIFIZIERUNG DER PHYSISCHEN IDENTITÄT EINER VORRICHTUNG SOWIE SYSTEM UND ERSTE PLATTFORM
PROCÉDÉ ET APPAREIL D'AUTHENTIFICATION D'IDENTITÉ PHYSIQUE DE DISPOSITIF, SYSTÈME ET PREMIÈRE PLATEFORME

(30) Priority: 25.02.2022 CN 202210181942
(43) Date of publication of application: 01.01.2025
(73) Proprietor: Hangzhou Ezviz Software Co., Ltd., Zhejiang 310051 (CN)
(72) Inventor: PAN, Long, Hangzhou, Zhejiang 310051 (CN)
(74) Representative: Epping - Hermann - Fischer
(86) International application number: PCT/CN2023/072108
(87) International publication number: WO 2023/160299

(56) References cited:
- CN-A- 113 783 829
- CN-A- 114 584 313
- US-A1- 2005 097 316
- US-A1- 2016 099 814
- US-A1- 2017 006 030
- US-A1- 2019 356 529
- US-B1- 6 826 690
- US-B1- 6 826 690
- US-B1- 9 992 029

## Description

The present application claims the priority to a Chinese patent application No. 202210181942.9 filed with the China National Intellectual Property Administration on February 25, 2022 and titled "METHOD, SYSTEM AND APPARATUS OF AUTHENTICATING A PHYSICAL IDENTITY OF A DEVICE, AND FIRST PLATFORM".

### TECHNICAL FIELD

The present application relates to the technical field of computer and network, and in particular to a method, system and apparatus of authenticating a physical identity of a device, and a first platform.

### BACKGROUND

For security reasons, a platform often only allows authenticated legitimate devices to perform a service. In the related art, the platform can determine whether an accessed device is a legitimate device by verifying an authority of the device. However, the verification of authority is often complicated. Therefore, the platform verifies the authority of the device only when the device is accessed for the first time. If the device passes the verification, a device physical identification is assigned to the device. When a device requests to perform a service, the platform obtains the device physical identification sent by the device. If there is a device physical identification, that is consistent with the device physical identification sent by the device, among device physical identifications stored locally in the platform, the device is considered to be a legitimate device and is allowed to perform the service.

However, in the case where there are multiple physically isolated platforms, a platform cannot obtain the device physical identification assigned to the device by another platform. Therefore, if the device is transferred from the another platform to the platform, the platform cannot determine whether the device is a legitimate device based on the physical identification assigned to the device by the another platform. Therefore, it is necessary to re-assign a new device physical identification to the device, resulting in different physical device identifications of the device at different platforms, which is not conducive to cross-platform management of the device.

US 2019/356529 A1 discloses a secure programming system and method for provisioning and programming a target payload into a programmable device mounted in a programmer. The programmable device can be authenticated before programming to verify the device is a valid device produced by a silicon vendor. The authentication process can include a challenge-response validation. The target payload can be programmed into the programmable device and linked with an authorized manufacturer. The programmable device can be verified after programming the target payload by verifying the silicon vendor and the authorized manufacturer.

### SUMMARY

The purpose of the embodiments of the present application is to provide a method, system and apparatus of authenticating a physical identity of a device, and a first platform, to enable a consistent device physical identification of a same device at different platforms, so as to facilitate cross-platform management of the device. The specific technical solutions are as follows.

The present invention is set forth in the appended set of claims.

Beneficial effects of the embodiments of the present application:
The embodiments of the present application provide a method, system and apparatus of authenticating a physical identity of a device, and the first platform. The digital signature can be obtained by encrypting the device information by the second platform using the platform key. Since device information of the to-be-identified device will not change, even if the to-be-identified device is transferred from the second platform to the first platform, the first platform can still determine the digital signature generated by the second platform for the to-be-identified device based on the device information, and thereby determine whether the digital signature sent by the to-be-identified device is the digital signature generated by the second platform for the to-be-identified device. If the digital signature sent by the to-be-identified device is the digital signature generated by the second platform for the to-be-identified device, the to-be-identified device is considered to be a device verified by the second platform, and thus the to-be-identified device is a legitimate device. It can be seen that the first platform can authenticate the physical identity of the to-be-identified device based on the digital signature generated by the second platform for the to-be-identified device, without re-generating a new digital signature for the to-be-identified device. Therefore, the to-be-identified device can be identified by the same digital signature, thereby effectively managing the device across platforms.

Of course, it is not necessary for any product or method implementing the present application to achieve all the advantages described above simultaneously.

### BRIEF DESCRIPTION OF THE DRAWINGS

The accompanying drawings described here are used to provide a further understanding of the present application and constitute a part of the same. The illustrative embodiments of the present application and their descriptions are used to explain the present application and do not constitute an improper limitation to the present application.
Figure 1 is a schematic flowchart of a method of authenticating a physical identity of a device provided by an embodiment of the present application;
Figure 2 is a schematic flowchart of authenticating a device physical identity by a first platform when a device accesses the first platform in a case where the device has never accessed a second platform provided by an embodiment of the present application;
Figure 3 is a schematic diagram of an application scenario of a method of authenticating a physical identity of a device provided by an embodiment of the present application;
Figure 4 is a schematic interaction diagram in a scenario where a device is assigned a physical identity on a second platform and transferred to a first platform provided by an embodiment of the present application;
Figure 5 is a schematic structure diagram of an apparatus of authenticating a physical identity of a device provided by an embodiment of the present application, which is not according to the claimed invention and is provided for illustrative purposes only;
Figure 6 is a schematic structure diagram of an electronic device provided by an embodiment of the present application.

### DETAILED DESCRIPTION

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art without any creative efforts fall into the scope of protection of the present application.

In order to more clearly illustrate the method of authenticating a physical identity of a device provided by the present application, the application scenario of the method of authenticating a physical identity of a device provided by the present application is exemplarily described below. It can be understood that the following example is only one possible application scenario of the method of authenticating a physical identity of a device provided by the embodiment of the present application. In other possible embodiments, the method of authenticating a physical identity of a device provided by the embodiments of the present application can also be applied to other possible application scenarios, which is not limited in the following example.

It is assumed that there are two platforms physically isolated, which are respectively denoted as a first platform and a second platform, and assumed that each of the first platform and the second platform assigns device physical identifications to devices in an accessing order of the devices. For example, if the device is the first one accessing the platform, the platform assigns a device physical identification 1 to the device; if the device is the second one accessing the platform, the platform assigns a device physical identification 2 to the device, and so on.

It is assumed that 10 devices have accessed the first platform, 5 devices have accessed the second platform, the tenth device accessing the first platform is referred to as a first device, then the device physical identification 10 is assigned by the first platform to the first device. For actual needs, the first device is transferred from the first platform to the second platform. Since the first platform is physically isolated from the second platform, the second platform cannot know the device physical identification assigned by the first platform to the first device, and thus the second platform cannot determine whether the first device is a legitimate device based on the device identification "10" sent by the first device, that is, the second platform cannot authenticate the physical identity of the first device based on the device physical identification of the first device. In this case, the second platform needs to re-assign a new device physical identification to the first device. Since the first device is the sixth one accessing the second platform, the device physical identification 6 is assigned by the second platform to the first device.

It can be seen that the first platform and the second platform assign different device physical identifications to the same device. Similarly, the first platform and the second platform may also assign the same device physical identification to different devices, which results that the device physical identification is unable to uniquely identify a device, thus making it difficult to manage the device across platforms based on the device physical identification.

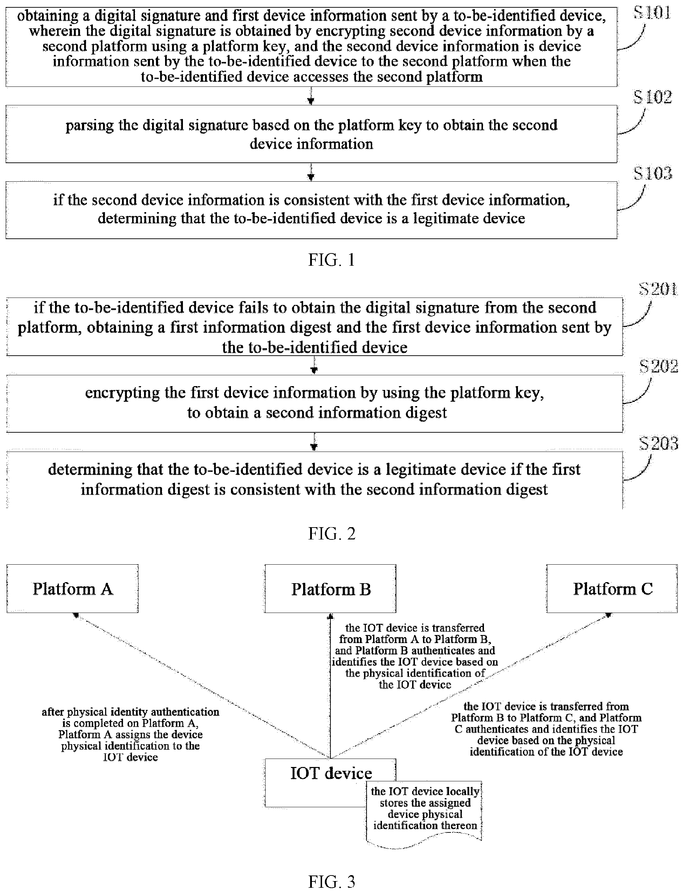

Based on this, an embodiment of the present application provides a method of authenticating a physical identity of a device, which is applied to a first platform, and the first platform can be any platform. As shown in Figure 1, the method of authenticating a physical identity of a device provided by the embodiment of the present application includes:
S101, obtaining a digital signature and first device information sent by a to-be-identified device, wherein the digital signature is obtained by encrypting second device information by a second platform using a platform key, and the second device information is device information sent by the to-be-identified device to the second platform when the to-be-identified device accesses the second platform.

S102, obtaining the second device information by parsing the digital signature based on the platform key.

S103, determining that the to-be-identified device is a legitimate device if the second device information is consistent with the first device information.

By selecting this embodiment, the digital signature can be obtained by encrypting the device information by the second platform based on the platform key. Since device information of the to-be-identified device will not change, even if the to-be-identified device is transferred from the second platform to the first platform, the first platform can still determine, based on the device information, the digital signature generated by the second platform for the to-be-identified device, and thereby determine whether the digital signature sent by the to-be-identified device is the digital signature generated by the second platform for the to-be-identified device. If the digital signature sent by the to-be-identified device is the digital signature generated by the second platform for the to-be-identified device, the to-be-identified device is considered to be a device verified by the second platform, and thus the to-be-identified device is a legitimate device.

It can be seen that the first platform can authenticate the physical identity of the to-be-identified device based on the digital signature generated by the second platform for the to-be-identified device, without re-generating a new digital signature for the to-be-identified device, so that the to-be-identified device can be identified by the same digital signature, thereby effectively managing the device across platforms.

The above S101-S103 will be described below respectively.

In S101, the second platform and the first platform may be a same platform or different platforms. For the convenience of description, the following description only takes the case where the second platform is different from the first platform as an example. The principles also apply to the case where the second platform and the first platform are the same platform, which is not repeated herein.

The first device information may be any unchangeable information stored locally on the to-be-identified device. For example, for the device serial number of the to-be-identified device, since the device serial number is burned into the to-be-identified device when the to-be-identified device is generated, the device serial number of the to-be-identified device will not change. The first device information may also be a device verification code of the to-be-identified device, or any substring of the device serial number of the to-be-identified device, any substring of the device verification code of the to-be-identified device, or a concatenated string obtained by concatenating the device serial number and the device verification code of the to-be-identified device, etc., which is not limited by this embodiment.

In the embodiment of the present application, before the first platform executes step S101, the to-be-identified device has accessed the second platform, and the second platform has generated device information for the to-be-identified device. Herein, for the convenience of description, the device information sent by the to-be-identified device during the first platform authenticating the device physical identity of the to-be-identified device is referred to as first device information, and the device information sent by the to-be-identified device during the second platform generating the digital signature for the to-be-identified device is referred to as second device information. The second device information should be exactly the same as the first device information.

The digital signature can be obtained by directly encrypting the second device information, or can be obtained by pre-processing the second device information and then encrypting the pre-processed second device information. Exemplarily, if a length of the second device information is a preset length, the second device information is directly encrypted to obtain the digital signature. If the length of the second device information is not the preset length, a hash value of the second device information is calculated, and the foremost bits with the preset length of the calculated hash value are encrypted to obtain the digital signature. By selecting this embodiment, the length of the digital signature can be a fixed value and will not change with the change of the length of the second device information, so as to facilitate subsequent processing.

Furthermore, the digital signature may be obtained by encrypting only the second device information, or may be obtained by encrypting the second device information and other information together. Exemplarily, in one possible embodiment, the second platform encrypts a combined string obtained by combining the second device information and a timestamp, to obtain a digital signature, wherein the timestamp indicates the time when the second platform starts generating the digital signature. By selecting this embodiment, it is allowed to avoid assigning the same device physical identification to the to-be-identified devices that have the same device information, thereby enabling the platform to distinguish the to-be-identified devices that have the same device information.

The format of the combined string can vary depending on the application scenario. Exemplarily, the combined string is a string of 20 bytes in length, wherein the 1st to 9th bytes are the second device information, the 10th byte is a fixed value "&", and the 11th to 20th bytes are the timestamp. In this example, if the length of the second device information is not 9 bytes, the hash value of the second device information is calculated, and the foremost 9 bytes of the hash value are taken as the pre-processed second device information.

In S102, it can be understood that if the digital signature is obtained by encrypting the pre-processed second device information by the second platform, the second device information obtained by parsing the digital signature based on the platform key is also the pre-processed device information. In contrast, if the digital signature is obtained by encrypting the un-preprocessed second device information by the second platform, the second device information obtained by parsing the digital signature based on the platform key is the un-preprocessed device information.

In S103, if the second device information obtained by parsing is the pre-processed second device information, the first device information is pre-processed to obtain pre-processed first device information. The second device information being consistent with the first device information means that the pre-processed second device information obtained by parsing is the same as the pre-processed first device information.

Exemplarily, assuming that the pre-processing is performed by calculating the hash value and taking the foremost 9 bytes of the hash value, then the hash value of the first device information is calculated, and the foremost 9 bytes of the calculated hash value are taken as a platform digest. If the platform digest is the same as the pre-processed second device information obtained by parsing, it is determined that the to-be-identified device is a legitimate device.

If the second device information obtained by parsing is the second device information not being pre-processed, then the second device information being consistent with the first device information means that the second device information not being pre-processed obtained by parsing is the same as the first device information sent by the to-be-identified device.

In the above S102, the platform key based on which the first platform parses the digital signature to obtain the second device information should be the same as the platform key based on which the second platform generates the digital signature. In a possible embodiment, the platform key can be pre-stored in the first platform and the second platform respectively.

The above method further includes:
S104, obtaining encryption indicating information sent by the to-be-identified device, wherein the encryption indicating information is sent by the second platform to the to-be-identified device and is used to identify the platform key.

Wherein, the to-be-identified device can send the digital signature and the encryption indicating information to the first platform respectively, or carry the digital signature and the encryption indicating information in the same information and send it to the first platform. Exemplarily, in one possible embodiment, the to-be-identified device sends physical identification information to the first platform, and the physical identification information carries the encryption indicating information and the digital signature thererin. For example, the physical identification information is information with a length of 22 bytes, with the first byte being the encryption indicating information, the second byte being a fixed value "&", and the third to 22nd bytes being the digital signature.

The encryption indicating information is used to uniquely identify the platform key, that is, different pieces of encryption indicating information corresponds to different platform keys, and the same encryption indicating information corresponds to the same platform key. Exemplarily, taking the encryption indicating information with a length of 1 byte as an example, the encryption indicating information can be represented as a two-digit hexadecimal number. In this example, the relationship between the encryption indicating information and the platform key can be shown in Table 1:

**Table 1. correspondence table between encryption indicating information and platform key**

| encryption indicating information | platform key |
|---|---|
| 0x00 | the first platform key |
| 0x01 | the second platform key |
| ... | ... |
| 0xFF | the 256-th platform key |

wherein the second row in Table 1 indicates that the encryption indicating information 0x00 corresponds to the first platform key, the third row in Table 1 indicates that the encryption indicating information 0x01 corresponds to the second platform key, and so on. 0x indicates that the encryption indicating information is expressed in hexadecimal format.

Taking Table 1 as an example, if the platform key used by the second platform in generating the digital signature is the first platform key, the encryption indicating information sent by the second platform to the to-be-identified device is 0x00; if the platform key used by the second platform in generating the digital signature is the second platform key, the encryption indicating information sent by the second platform to the to-be-identified device is 0x01, and so on.

S105, determining the platform key based on the encryption indicating information.

Still taking the above Table 1 as an example, if the encryption indicating information is 0x00, the first platform determines that the platform key is the first platform key; if the encryption indicating information is 0x01, the first platform determines that the platform key is the second platform key, and so on.

By selecting this embodiment, the second platform is enabled to generate the digital signature through different keys, thereby reducing the possibility of the digital signature being cracked. Therefore, it is more difficult for an illegitimate device to pass the authentication by forging a digital signature, which effectively provides security.

The digital signature is generated by the second platform for the to-be-identified device. In one possible embodiment, the digital signature can be regarded as the device physical identification of the to-be-identified device. In another possible embodiment, combined information obtained by combining the digital signature and other information can also be regarded as the device physical identification of the to-be-identified device. For example, the aforementioned device identification information is regarded as the device physical identification of the to-be-identified device.

Furthermore, before accessing the second platform, the to-be-identified device cannot obtain the digital signature generated by the second platform for the to-be-identified device. Therefore, before the execution of S101, the to-be-identified device should have previously accessed the second platform.

For the case where the to-be-identified device has never accessed the second platform, please refer to Figure 2, including:
S201, if the to-be-identified device fails to obtain the digital signature from the second platform, obtaining a first information digest and the first device information sent by the to-be-identified device.

The first information digest is obtained by encrypting the first device information by the to-be-identified device based on the platform key.

S202, encrypting the first device information by using the platform key, to obtain a second information digest.

S203, determining that the to-be-identified device is a legitimate device if the first information digest is consistent with the second information digest.

If the first information digest is consistent with the second information digest, it is considered that the short-term key used by the to-be-identified device and the long-term key used by the first platform are a pair of keys. Therefore, the to-be-identified device is a device that has passed the authority verification of the first platform, and therefore the to-be-identified device is considered to be a legitimate device.

By selecting this embodiment, the to-be-identified device can be authenticated in the case where the to-be-identified device has never accessed the second platform, so as to avoid the legitimate device being unable to perform services normally.

It is understandable that if the to-be-identified device fails to obtain the digital signature from the second platform, it is considered that the to-be-identified device has not been assigned a device physical identification, so the first platform needs to assign a device physical identification to the to-be-identified device. Therefore, in one possible embodiment, based on the above Figure 2, the above method of authenticating a physical identity of a device further includes:
S204, encrypting the first device information using the platform key to obtaining a ciphertext, if the first information digest is consistent with the second information digest;
S205, sending the ciphertext to the to-be-identified device as the digital signature of the to-be-identified device.

In order to more clearly illustrate the method of authenticating a physical identity of a device provided by the embodiments of the present application, an exemplary explanation will be given below in combination with the first platform, the second platform, and the to-be-identified device. Refer to Figure 3, which is a schematic diagram of an application scenario of the method of authenticating a physical identity of a device provided by the embodiments of the present application. In the application scenario shown in Figure 3, there are three platforms that are physically isolated from each other, namely Platform A, Platform B, and Platform C. An IOT (Internet Of Things) device firstly accesses Platform A and performs service under the scheduling of Platform A. After a period of time, for actual needs, the IOT device is transferred from Platform A to Platform B, and performs service under the scheduling of Platform B. After another period of time, for actual needs, the IOT device is transferred from Platform B to Platform C, and performs service under the scheduling of Platform C.

Exemplary, in some possible practical application scenarios, the IOT device can be a smart home control device, including smart switches, smart lights, smart door locks and other devices, and Platform A, Platform B and Platform C are different smart central control platforms. Taking the IOT device being a smart switch as an example, the smart switch firstly accesses the smart central control platform A, and performs a switch operation under the scheduling of the smart central control platform A. After a period of time, for actual needs, the smart switch needs to be transferred from the smart central control platform A to the smart central control platform B, and performs the switch operation under the scheduling of the smart central control Platform B. After another period of time, for actual needs again, the smart switch is transferred from the smart central control platform B to the smart central control platform C, and performs the switch operation under the scheduling of the smart central control Platform C.

The following three sub-scenarios in this application scenario are described below:
Sub-scenario 1: an IoT device accesses Platform A and performs service under the scheduling of Platform A;
Sub-scenario 2: an IoT device accesses Platform B and performs service under the scheduling of Platform B;
Sub-scenario 3: an IoT device accesses Platform C and performs service under the scheduling of Platform C.

For the sub-scenario 1: the IOT device accesses the platform for the first time, so the IOT device has not been assigned a device physical identification by any platform. Platform A needs to perform physical identity authentication on the IOT device, and assign a device physical identification to the IOT device if the IOT device is determined as a legitimate device.

In sub-scenario 1, the IOT device is equivalent to the above to-be-identified device, and Platform A is equivalent to the above second platform. In response to the IOT device accessing Platform A, Platform A performs physical identity authentication on the IOT device to determine whether the accessed IOT device is a legitimate device. If the accessed IOT device is an illegitimate device, Platform A disconnects from the IOT device. If the accessed IOT device is a legitimate device, Platform A obtains the second device information of the IOT device, and generates a device physical identification for the IOT device based on the second device information, and sends the device physical identification to the IOT device, so that the IOT device can save the device physical identification thereon locally.

In this example, the device physical identification consists of 22 bytes, with the first byte being used to indicate the encryption indicating information, the second byte being a fixed value "&", and the third to the 22nd bytes being the digital signature encrypted through the platform key. If the length of the second device information is 9 bytes, the first to the ninth bytes in the digital signature are the second device information. If the length of the second device information is not 9 bytes, the first to the ninth bytes in the digital signature are the foremost 9 bytes of the hash value of the second device information, the tenth byte in the digital signature is a fixed value "&", and the 11th to the 20th bytes are the timestamp. For the convenience of description, the case where the length of the second device information is not 9 bytes will be described below by way of example.

For sub-scenario 2: it is not the first time that the IOT device accesses the platform, so the IOT device has been assigned a device physical identification by Platform A. Platform B performs physical identity authentication on the IOT device based on the device physical identification of the IOT device. However, since Platform A is physically isolated from Platform B, Platform B fails to locally store the device physical identification assigned by Platform A to the IOT device.

In sub-scenario 2, the IOT device is equivalent to the above to-be-identified device, Platform A is equivalent to the above second platform, Platform B is equivalent to the above first platform, and Platform B performs physical identity authentication on the IOT device based on any method of authenticating a physical identity of a device provided by the present application.

In this example, in response to accessing Platform B, the IOT device sends the first device information and the device physical identification to Platform B. Platform B parses the device physical identification to obtain the encryption indicating information and the digital signature, determines the platform key based on the encryption indicating information, and decrypts the digital signature using the determined platform key, to obtain the foremost 9 bytes of the hash value of the second device information. Platform B hashes the first device information to obtain the foremost 9 bytes of the hash value of the first device information. Platform B determines whether the foremost 9 bytes of the hash value of the first device information are the same as the foremost 9 bytes of the hash value of the second device information. If the foremost 9 bytes of the hash value of the first device information are the same as the foremost 9 bytes of the hash value of the second device information, it is considered that the first device information is the same as the second device information, that is, the IOT device is a legitimate device. Otherwise, the foremost 9 bytes of the hash value of the first device information are different form the foremost 9 bytes of the hash value of the second device information, it is considered that the first device information is different from the second device information, that is, the IOT device is an illegitimate device.

If the IOT device is a legitimate device, Platform B will subsequently identify the IOT device through the device physical identification of the IOT device.

For the sub-scenario 3: it is not the first time that the IOT device accesses the platform, so the IOT device has been assigned a device physical identification by Platform A. Platform C performs physical identity authentication on the IOT device based on the device physical identification of the IOT device. However, since Platform A is physically isolated from Platform C, Platform C also fails to locally store the device physical identification assigned by Platform A to the IOT device.

In the sub-scenario 3, the IOT device is equivalent to the above to-be-identified device, Platform A is equivalent to the above second platform, Platform C is equivalent to the above first platform, and Platform C performs physical identity authentication on the IOT device according to any of the methods of authenticating a physical identity of a device provided by the present application. The way in which Platform C performs physical identity authentication on the IOT device is the same as that of Platform B, and can refer to the relevant description of sub-scenario 2 above, which will not be described again here.

If the IOT device is a legitimate device, Platform C will subsequently identify the IOT device through the device physical identification of the IOT device.

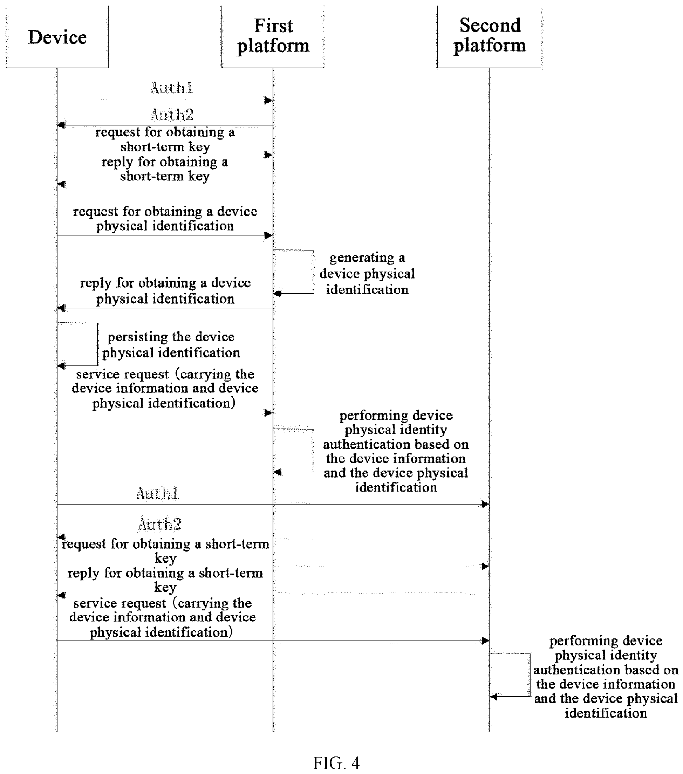

The following will describe the interaction process between the to-be-identified device, the first platform, and the second platform. Refer to Figure 4, which is a schematic interaction diagram in a scenario where a device is assigned a physical identity on the second platform and transferred to the first platform provided by the embodiment of the present application. The following will describe each step respectively:
Auth1, Auth2, request for obtaining a short-term key, reply for obtaining a short-term key are the processes of agreeing on a short-term key (a session key) between the to-be-identified device and the second platform. After agreeing on the session key, the to-be-identified device uses the short-term key to perform subsequent service interactions with the first platform.

After agreeing on the short-term key, the to-be-identified device sends, to the second platform, a request for a short-term key carrying the second device information. In response to the request for a short-term key, the second platform generates a digital signature of the to-be-identified device based on the second device information, and generates a device physical identification of the to-be-identified device based on the digital signature. For the digital signature and device physical identification, please refer to the above-mentioned related descriptions, which will not be describe again here.

The second platform sends, to the to-be-identified device, a reply for obtaining a device physical identification, which carries the device physical identification. The to-be-identified device obtains the device physical identification by parsing the reply for obtaining the device physical identification and persists the device physical identification, that is, locally stores the device physical identification thereon.

When subsequently interacting with the second platform for service, the to-be-identified device sends a service request to the second platform and carries the second device information and the device physical identification in the service request. The second platform queries the device physical identification assigned to the to-be-identified device. If the queried device physical identification is consistent with the device physical identification carried in the service request, the second platform determines that the to-be-identified device has passed the authentication, and thus continues to interact with the to-be-identified device for service in response to the service request sent by the to-be-identified device.

After being transferred from the second platform to the first platform, the to-be-identified device agrees on a short-term key (a session key) with the first platform through the processes of Auth1, Auth2, request for obtaining a short-term key, and a reply for obtaining a short-term key. After agreeing on the session key, the to-be-identified device uses the short-term key for subsequent service interactions with the first platform.

When subsequently interacting with the first platform for service, the to-be-identified device sends a service request to the first platform and carries the first device information and the device physical identification in the service request. The first platform queries the device physical identification assigned to the to-be-identified device. If the queried device physical identification is consistent with the device physical identification carried in the service request, the first platform determines that the to-be-identified device has passed the authentication, and thus continues to interact with the to-be-identified device for service in response to the service request sent by the to-be-identified device.

If the first platform fails to query the device physical identification assigned to the to-be-identified device, the first platform uses the platform key to parse the digital signature in the device physical identification to obtain the device information. If the device information obtained by parsing is consistent with the first device information carried in the service request, the first platform determines that the to-be-identified device has passed the authentication, and thus continues to interact with the to-be-identified device for service in response to the service request sent by the to-be-identified device. Further, the device physical identification carried in the service request is used as the device physical identification assigned to the to-be-identified device by the first platform.

Corresponding to the above methods of authenticating a physical identity of a device, embodiments of the present application further provide a cross-platform physical identity recognition system, which includes a first platform, a second platform and a to-be-identified device, wherein the first platform is physically isolated from the second platform.

The to-be-identified device is configured for accessing the second platform and the first platform in sequence, and sending second device information to the second platform when accessing the second platform;
the second platform is configured for determining whether the to-be-identified device is a legitimate device in response to the to-be-identified device accessing the second platform; and encrypting, if the to-be-identified device is identified to be a legitimate device, the second device information by using a platform key to obtaining a digital signature, and sending the digital signature to the to-be-identified device;
the to-be-identified device is further configured for sending the digital signature and the first device information to the first platform when accessing the first platform;
the first platform is configured for obtaining the second device information by parsing the digital signature based on the platform key; and determining that the to-be-identified device is a legitimate device if the second device information is consistent with the first device information.

The first platform is a platform to which the to-be-identified device is accessed for the first time, that is, the to-be-identified device has not accessed any platform in the cross-platform device physical identity recognition system before accessing the first platform.

In one possible embodiment, the second platform is further configured for sending encryption indicating information for identifying the platform key to the to-be-identified device if the to-be-identified device is identified to be a legitimate device;
the to-be-identified device is further configured for sending the encryption indicating information to the first platform when accessing the first platform;
the first platform is further configured for determining the platform key based on the encryption indicating information.

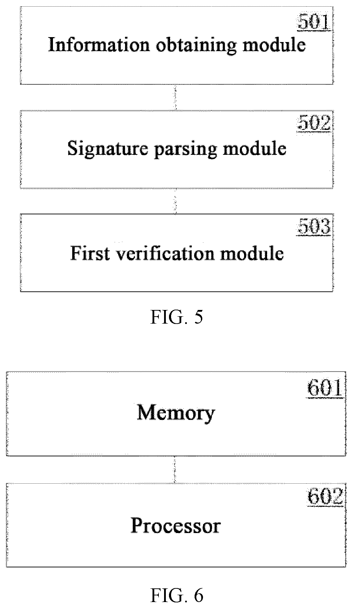

Corresponding to the above methods of authenticating a physical identity of a device, the embodiments of the present application further provide an apparatus of authenticating a physical identity of a device, which is applied to a first platform, as shown in Figure 5, including:
an information obtaining module 501, configured for obtaining a digital signature and first device information sent by a to-be-identified device, wherein the digital signature is obtained by encrypting second device information by a second platform using a platform key, and the second device information is device information sent by the to-be-identified device to the second platform when the to-be-identified device accesses the second platform;
a signature parsing module 502, configured for obtaining the second device information by parsing the digital signature based on the platform key;
a first verification module 503, configured for determining that the to-be-identified device is a legitimate device if the second device information is consistent with the first device information.

In one possible embodiment, the information obtaining module is further configured for obtaining encryption indicating information sent by the to-be-identified device, wherein the encryption indicating information is sent by the second platform to the to-be-identified device and is used to identify the platform key;
determining the platform key based on the encryption indicating information.

In one possible embodiment, the information obtaining module obtaining the digital signature and the first device information sent by the to-be-identified device, includes:
obtaining, if the to-be-identified device has obtained the digital signature from the second platform, the digital signature and the first device information sent by the to-be-identified device;
the apparatus further includes a second verification module, which is configured for obtaining, if the to-be-identified device fails to obtain the digital signature from the second platform, a first information digest and the first device information sent by the to-be-identified device, wherein the first information digest is obtained by encrypting the first device information by the to-be-identified device based on a short-term key;
encrypting the first device information by using a long-term key corresponding to the short-term key, to obtain a second information digest;
determining that the to-be-identified device is a legitimate device if the first information digest is consistent with the second information digest.

In one possible embodiment, the apparatus further includes a signature generation module, which is configured for encrypting the first device information by using the platform key to obtain a ciphertext if the first information digest is consistent with the second information digest;
sending the ciphertext to the to-be-identified device as the digital signature of the to-be-identified device.

An embodiment of the present application further provides a first platform, as shown in Figure 6, including:
a memory 601, configured for storing a computer program;
a processor 602, configured for carrying out the following steps when executing the programs stored in the memory 601:
   obtaining a digital signature and first device information sent by a to-be-identified device, wherein the digital signature is obtained by encrypting second device information by a second platform using a platform key, and the second device information is device information sent by the to-be-identified device to the second platform when the to-be-identified device accesses the second platform;
   obtaining the second device information by parsing the digital signature based on the platform key;
   determining that the to-be-identified device is a legitimate device if the second device information is consistent with the first device information.

In addition to the memory 601 and the processor 602, the first platform provided by the embodiment of the present application may include other components. Exemplary, in one possible embodiment, the electronic device further includes a communication interface and a communication bus.

The communication bus mentioned in the first platform may be a Peripheral Component Interconnect (PCI) bus or an Extended Industry Standard Architecture (EISA) bus, etc. The communication bus may be divided into an address bus, a data bus, a control bus, etc.

The communication interface is used for communication between the above electronic device and other devices.

The memory may include a random access memory (RAM) or a non-volatile memory (NVM), such as at least one disk memory. Optionally, the memory may also be at least one storage device located away from the aforementioned processor.

The above processor can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gate or transistor logic devices, discrete hardware components.

In yet another embodiment provided by the present application, a computer-readable storage medium is provided, which has a computer program stored thereon, wherein the computer program, when executed by a processor, carries out the steps of any one of the above methods of authenticating a physical identity of a device.

In yet another embodiment provided by the present application, a computer program product including instructions is further provided, which, when running on a computer, cause the computer to carry out any one of the methods of authenticating a physical identity of a device in the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, here such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various embodiments in this specification are described in a related manner. Each embodiment focuses on the differences from other embodiments, and the same and similar parts between the various embodiments can be referred to each other. Especially, for the embodiments of the system, the description is relatively simple because it is basically similar to the embodiments of the method, and the relevant points can be referred to the partial description of the embodiments of the method.

## Claims

1. A method of authenticating a physical identity of a device, which is applied to a first platform, the method comprises:
obtaining (S101) a digital signature and first device information sent by a to-be-identified device, wherein the digital signature is obtained by encrypting second device information by a second platform using a platform key, and the second device information is device information sent by the to-be-identified device to the second platform when the to-be-identified device accesses the second platform, wherein the first platform is physically isolated from the second platform;
obtaining (S102) the second device information by parsing the digital signature based on the platform key;
determining (S103) that the to-be-identified device is a legitimate device if the second device information is consistent with the first device information;
wherein the method further comprises:
obtaining (S104) encryption indicating information sent by the to-be-identified device, wherein the encryption indicating information is sent by the second platform to the to-be-identified device and is used to identify the platform key;
determining (S105) the platform key based on the encryption indicating information.

2. The method according to claim 1, wherein obtaining (S101) the digital signature and the first device information sent by the to-be-identified device comprises:
if the to-be-identified device has obtained the digital signature from the second platform, obtaining the digital signature and the first device information sent by the to-be-identified device;
the method further comprises:
if the to-be-identified device fails to obtain the digital signature from the second platform, obtaining (S201) a first information digest and the first device information sent by the to-be-identified device, wherein the first information digest is obtained by encrypting the first device information by the to-be-identified device based on a short-term key;
encrypting (S202) the first device information by using a long-term key corresponding to the short-term key, to obtain a second information digest;
determining (S203) that the to-be-identified device is a legitimate device if the first information digest is consistent with the second information digest.

3. The method according to claim 2, wherein the method further comprises:
encrypting (S204) the first device information by using the platform key to obtain a ciphertext if the first information digest is consistent with the second information digest;
sending (S205) the ciphertext to the to-be-identified device as the digital signature of the to-be-identified device.

4. A first platform, comprising:
a memory (601), configured for storing a computer program;
a processor (602), configured for carrying out any of the methods according to any one of claims 1 to 3 when executing the program stored on the memory.

5. A cross-platform physical identity recognition system, comprising the first platform according to claim 4, a second platform and a to-be-identified device, wherein the first platform is physically isolated from the second platform;
the to-be-identified device is configured for accessing the second platform and the first platform in sequence, and sending second device information to the second platform when accessing the second platform;
the second platform is configured for determining whether the to-be-identified device is a legitimate device in response to the to-be-identified device accessing the second platform; and encrypting, if the to-be-identified device is identified to be a legitimate device, the second device information by using a platform key to obtain a digital signature, and sending the digital signature to the to-be-identified device;
the to-be-identified device is further configured for sending the digital signature and first device information to the first platform when accessing the first platform;
the first platform is configured for obtaining the second device information by parsing the digital signature based on the platform key; and determining that the to-be-identified device is a legitimate device if the second device information is consistent with the first device information,
wherein the second platform is further configured for sending encryption indicating information for identifying the platform key to the to-be-identified device if the to-be-identified device is identified to be a legitimate device;
the to-be-identified device is further configured for sending the encryption indicating information to the first platform when accessing the first platform;
the first platform is further configured for determining the platform key based on the encryption indicating information.

6. A computer-readable storage medium having a computer program stored thereon, wherein the computer program, when executed by a processor, carries out any of the methods according to any one of claims 1 to 3.

## Patentansprüche

1. Verfahren zur Authentifizierung der physischen Identität eines Geräts, das auf einer ersten Plattform angewendet wird, wobei das Verfahren umfasst:
Erhalten (S101) einer digitalen Signatur und erster Geräteinformationen, die von einem zu identifizierenden Gerät gesendet werden, wobei die digitale Signatur durch Verschlüsseln zweiter Geräteinformationen durch eine zweite Plattform unter Verwendung eines Plattformschlüssels erhalten wird und die zweiten Geräteinformationen Geräteinformationen sind, die von dem zu identifizierenden Gerät an die zweite Plattform gesendet werden, wenn das zu identifizierende Gerät auf die zweite Plattform zugreift, wobei die erste Plattform physisch von der zweiten Plattform isoliert ist;
Erhalten (S102) der zweiten Geräteinformationen durch Analysieren der digitalen Signatur auf der Grundlage des Plattformschlüssels;
Feststellen (S103), dass das zu identifizierende Gerät ein legitimes Gerät ist, wenn die zweiten Geräteinformationen mit den ersten Geräteinformationen übereinstimmen;
wobei das Verfahren ferner umfasst:
Erhalten (S104) von Verschlüsselungshinweisinformationen, die von dem zu identifizierenden Gerät gesendet werden, wobei die Verschlüsselungshinweisinformationen von der zweiten Plattform an das zu identifizierende Gerät gesendet werden und zur Identifizierung des Plattformschlüssels verwendet werden;
Bestimmen (S105) des Plattformschlüssels auf der Grundlage der Verschlüsselungshinweisinformationen.

2. Verfahren nach Anspruch 1, wobei das Erhalten (S101) der digitalen Signatur und der ersten Geräteinformationen, die von dem zu identifizierenden Gerät gesendet werden, Folgendes umfasst:
wenn das zu identifizierende Gerät die digitale Signatur von der zweiten Plattform erhalten hat, das Erhalten der digitalen Signatur und der ersten Geräteinformationen, die von dem zu identifizierenden Gerät gesendet werden;
das Verfahren umfasst ferner:
falls das zu identifizierende Gerät die digitale Signatur nicht von der zweiten Plattform erhalten hat, Erhalten (S201) eines ersten Informations-Digests und der ersten Geräteinformationen, die von dem zu identifizierenden Gerät gesendet werden, wobei der erste Informations-Digest durch Verschlüsseln der ersten Geräteinformationen durch das zu identifizierende Gerät auf der Grundlage eines Kurzzeit-Schlüssels erhalten wird;
Verschlüsseln (S202) der ersten Geräteinformationen unter Verwendung eines Langzeit-Schlüssels, der dem Kurzzeit-Schlüssel entspricht, um einen zweiten Informations-Digest zu erhalten;
Feststellen (S203), dass das zu identifizierende Gerät ein legitimes Gerät ist, wenn der erste Informations-Digest mit dem zweiten Informations-Digest übereinstimmt.

3. Verfahren nach Anspruch 2, wobei das Verfahren ferner umfasst:
Verschlüsseln (S204) der ersten Geräteinformationen unter Verwendung des Plattformschlüssels, um einen Chiffretext zu erhalten, wenn der erste Informations-Digest mit dem zweiten Informations-Digest übereinstimmt;
Senden (S205) des Chiffretextes an das zu identifizierende Gerät als die digitale Signatur des zu identifizierenden Geräts.

4. Eine erste Plattform, umfassend:
einen Speicher (601), der zum Speichern eines Computerprogramms konfiguriert ist;
einen Prozessor (602), der dazu konfiguriert ist, eines der Verfahren nach einem der Ansprüche 1 bis 3 auszuführen, wenn das im Speicher gespeicherte Programm ausgeführt wird.

5. Ein plattformübergreifendes System zur Erkennung physischer Identitäten, umfassend die erste Plattform nach Anspruch 4, eine zweite Plattform und ein zu identifizierendes Gerät, wobei die erste Plattform physisch von der zweiten Plattform isoliert ist;
das zu identifizierende Gerät dazu konfiguriert ist, nacheinander auf die zweite Plattform und die erste Plattform zuzugreifen und beim Zugriff auf die zweite Plattform zweite Geräteinformationen an die zweite Plattform zu senden;
die zweite Plattform dazu konfiguriert ist, als Reaktion auf den Zugriff des zu identifizierenden Geräts auf die zweite Plattform festzustellen, ob es sich bei dem zu identifizierenden Gerät um ein legitimes Gerät handelt; und, wenn das zu identifizierende Gerät als legitimes Gerät identifiziert wird, die zweiten Geräteinformationen unter Verwendung eines Plattformschlüssels zu verschlüsseln, um eine digitale Signatur zu erhalten, und die digitale Signatur an das zu identifizierende Gerät zu senden;
das zu identifizierende Gerät ferner dazu konfiguriert ist, beim Zugriff auf die erste Plattform die digitale Signatur und erste Geräteinformationen an die erste Plattform zu senden;
die erste Plattform dazu konfiguriert ist, die zweiten Geräteinformationen durch Analysieren der digitalen Signatur auf der Grundlage des Plattformschlüssels zu erhalten; und Feststellen, dass das zu identifizierende Gerät ein legitimes Gerät ist, wenn die zweiten Geräteinformationen mit den ersten Geräteinformationen übereinstimmen,
wobei die zweite Plattform ferner dazu konfiguriert ist, Verschlüsselungshinweisinformationen zur Identifizierung des Plattformschlüssels an das zu identifizierende Gerät zu senden, wenn das zu identifizierende Gerät als legitimes Gerät identifiziert wird;
wobei das zu identifizierende Gerät ferner dazu konfiguriert ist, die Verschlüsselungshinweisinformationen beim Zugriff auf die erste Plattform an die erste Plattform zu senden;
wobei die erste Plattform ferner dazu konfiguriert ist, den Plattformschlüssel auf der Grundlage der Verschlüsselungshinweisinformationen zu bestimmen.

6. Ein computerlesbares Speichermedium, auf dem ein Computerprogramm gespeichert ist, wobei das Computerprogramm, wenn es von einem Prozessor ausgeführt wird, eines der Verfahren nach einem der Ansprüche 1 bis 3 ausführt.

## Revendications

1. Procédé d'authentification de l'identité physique d'un dispositif, appliqué à une première plateforme, le procédé comprenant :
l'obtention (S101) d'une signature numérique et de premières informations relatives au dispositif envoyées par un dispositif à identifier, la signature numérique étant obtenue en chiffrant des deuxièmes informations relatives au dispositif par une deuxième plateforme à l'aide d'une clé de plateforme, et les deuxièmes informations relatives au dispositif étant des informations relatives au dispositif envoyées par le dispositif à identifier à la deuxième plateforme lorsque ce dernier accède à la deuxième plateforme, la première plateforme étant physiquement isolée de la deuxième plateforme ;
l'obtention (S102) des deuxièmes informations relatives au dispositif par analyse de la signature numérique à l'aide de la clé de plateforme ;
la détermination (S103) que le dispositif à identifier est un dispositif légitime si les deuxièmes informations relatives au dispositif concordent avec les premières informations relatives au dispositif ;
le procédé comprenant en outre :
l'obtention (S104) d'informations indicatives de chiffrement envoyées par le dispositif à identifier, lesdites informations indicatives de chiffrement étant envoyées par la deuxième plateforme au dispositif à identifier et servant à identifier la clé de plateforme ;
la détermination (S105) de la clé de plateforme sur la base des informations indicatives de chiffrement.

2. Procédé selon la revendication 1, dans lequel l'obtention (S101) de la signature numérique et des premières informations de dispositif envoyées par le dispositif à identifier comprend :
si le dispositif à identifier a obtenu la signature numérique de la deuxième plateforme, l'obtention de la signature numérique et des premières informations de dispositif envoyées par le dispositif à identifier ;
le procédé comprend en outre :
si le dispositif à identifier ne parvient pas à obtenir la signature numérique de la deuxième plateforme, l'obtention (S201) d'un premier résumé d'informations et des premières informations sur le dispositif envoyées par le dispositif à identifier, le premier résumé d'informations étant obtenu en chiffrant les premières informations sur le dispositif par le dispositif à identifier à l'aide d'une clé à court terme ;
le chiffrement (S202) des premières informations relatives au dispositif à l'aide d'une clé à long terme correspondant à la clé à court terme, afin d'obtenir un deuxième résumé d'informations ;
la détermination (S203) que le dispositif à identifier est un dispositif légitime si le premier résumé d'informations correspond au deuxième résumé d'informations.

3. Procédé selon la revendication 2, dans lequel le procédé comprend en outre :
le chiffrement (S204) des premières informations de dispositif à l'aide de la clé de plateforme afin d'obtenir un texte chiffré si le premier résumé d'informations est cohérent avec le deuxième résumé d'informations ;
l'envoi (S205) du texte chiffré au dispositif à identifier en tant que signature numérique dudit dispositif.

4. Première plateforme, comprenant :
une mémoire (601), configurée pour stocker un programme informatique ;
un processeur (602), configuré pour mettre en œuvre l'un quelconque des procédés selon l'une quelconque des revendications 1 à 3 lors de l'exécution du programme stocké dans la mémoire.

5. Système de reconnaissance d'identité physique multiplateforme, comprenant la première plateforme selon la revendication 4, une deuxième plateforme et un dispositif à identifier, dans lequel la première plateforme est physiquement isolée de la deuxième plateforme ;
le dispositif à identifier est configuré pour accéder successivement à la deuxième plateforme et à la première plateforme, et pour envoyer des informations relatives au deuxième dispositif à la deuxième plateforme lors de l'accès à celle-ci ;
la deuxième plateforme est configurée pour déterminer si le dispositif à identifier est un dispositif légitime en réponse à l'accès du dispositif à identifier à la deuxième plateforme ; et pour chiffrer, si le dispositif à identifier est identifié comme étant un dispositif légitime, les informations relatives au deuxième dispositif à l'aide d'une clé de plateforme afin d'obtenir une signature numérique, puis pour envoyer la signature numérique au dispositif à identifier ;
le dispositif à identifier est en outre configuré pour envoyer la signature numérique et les premières informations relatives au dispositif à la première plateforme lorsqu'il accède à celle-ci ;
la première plateforme est configurée pour obtenir les informations du deuxième appareil en analysant la signature numérique à l'aide de la clé de plateforme ; et pour déterminer que l'appareil à identifier est un appareil légitime si les informations du deuxième appareil correspondent aux informations du premier appareil,
dans lequel la deuxième plateforme est en outre configurée pour envoyer des informations indiquant le chiffrement permettant d'identifier la clé de plateforme à l'appareil à identifier si celui-ci est identifié comme étant un appareil légitime ;
le dispositif à identifier est en outre configuré pour envoyer les informations indiquant le chiffrement à la première plateforme lors de l'accès à celle-ci ;
la première plateforme est en outre configurée pour déterminer la clé de plateforme sur la base des informations indiquant le chiffrement.

6. Support de stockage lisible par ordinateur sur lequel est stocké un programme informatique, dans lequel le programme informatique, lorsqu'il est exécuté par un processeur, met en œuvre l'un quelconque des procédés selon l'une quelconque des revendications 1 à 3.
